(19) Europäisches Patentamt

European Patent Office

Office européen des brevets

(11) **EP 0 943 465 A1**

(12) **EUROPÄISCHE PATENTANMELDUNG**

(43) Veröffentlichungstag:
22.09.1999 Patentblatt 1999/38

(51) Int. Cl.⁶: **B60C 15/02**, B60C 17/04

(21) Anmeldenummer: 98122929.7

(22) Anmeldetag: 03.12.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **17.03.1998 DE 19811541**

(71) Anmelder:
**Continental Aktiengesellschaft
30165 Hannover (DE)**

(72) Erfinder:
• **Doering, Werner
30823 Garbsen (DE)**
• **Hesse, Heiko
30900 Wedemark (DE)**

(54) **Fahrzeugrad mit - insbesondere einteiliger - Felge und schlauchlosem Luftreifen, das insbesondere für Notlauf geeignet ist**

(57)   Fahrzeugrad mit - insbesondere einteiliger - Felge und schlauchlosem Luftreifen, das insbesondere für Notlauf geeignet ist,

- mit an jeder Seitenwand des Luftreifens ausgebildetem Wulstbereich zur Befestigung des Luftreifens an der Felge,
- mit wenigstens in einer axialen Stirnseite der Felge ausgebildeter Ringkammer mit zumindest einer radial inneren und einer radial äußeren Ringkammerwand, wobei die Ringkammer nach axial außen zur Stirnseite der Felge hin in ihrem radial inneren Bereich offen ausgebildet ist,
- wobei die radial innere Ringkammerwand in einem ersten axialen Erstreckungsbereich zylindrisch und in einem zweiten sich nach axial außen zur Stirnseite der Felge an den ersten Bereich anschließenden axialen Bereich stetig radial erweitert ausgebildet ist,
- wobei sich die Seitenwand des Reifens im montierten Zustand von axial außen durch die Öffnung in der axial außen ausgebildeten Ringkammerwand hindurch nach innen erstreckt,
- wobei ein Füllring im montierten Zustand des Fahrzeugreifens im ersten und im zweiten axialen Bereich mit korrespondiered zur radial äußeren Oberfläche der inneren Ringkammerwand ausgebildeter radialer Innenfläche auf der radial äußeren Oberfläche der inneren Ringkammerwand spielfrei aufliegt,
- wobei die radial äußere Oberfläche des Füllrings im montierten Zustand des Fahrzeugreifens im ersten und im zweiten axialen Bereich jeweils parallel zur radial inneren Oberfläche des Füllrings ausgebildet ist,

- wobei die radial äußere Oberfläche des Füllrings im montierten Zustand des Fahrzeugreifens innerhalb der Ringkammer zumindest im ersten axialen Bereich mit in radialer Richtung formschlüssigem Berührkontakt zum Wulstbereich ausgebildet ist,
- wobei der Wulstbereich mit seiner radialen Außenseite in der Ringkammer in formschlüssigem Berührkontakt zur radial äußeren Ringkammerwand steht, sodaß der Wulstbereich nach radial außen und über den Füllring nach radial innen formschlüssig mit der Ringkammer verbunden ist.

FIG. 1

## Beschreibung

Die Erfindung betrifft ein Fahrzeugrad mit - insbesondere einteiliger - Felge und schlauchlosem Luftreifen, das insbesondere für Notlauf geeignet ist.

Aus der US 1,932,191 ist es bekannt, seitlich in einer Felge einen flexiblen Wulst eines Fahrzeugluftreifen mithilfe eines zwischen Felge und Wulst ausgebildeten Klemmrings, in einer Umfangsrille zu befestigen. Notlauf oder Notlaufprobleme sind der US 1,932,191 nicht zu entnehmen. Der Klemmring hat eine quadratische Querschnittsfläche, die ausreichend große axiale Angriffsflächen zur Montage aufweist. Das Gewicht des Klemmrings wird hierdurch vergleichsweise groß. Bei dem in seiner axialen Position nicht weiter gesicherten Klemmring kann - verstärkt durch die große axiale Angriffsfläche - die Gefahr auftreten, daß sich der Klemmring unbeabsichtigt aus seiner axialen Position löst. Hierdurch ist die Zuverlässigkeit der Befestigung des Reifens gefährdet.

Der Erfindung liegt die Aufgabe zugrunde ein derartiges Fahrzeugrad zu schaffen, bei dem eine Befestigung des Reifens auf der Felge funktionssicher gewährleistet ist.

Die Aufgabe wird erfindungsgemäß durch die Ausbildung des Fahrzeugrades mit - insbesondere einteiliger - Felge und schlauchlosem Luftreifen, das insbesondere für Notlauf geeignet ist gemäß den Merkmalen des Anspruchs 1 gelöst. Das Fahrzeugrad ist mit an jeder Seitenwand des Luftreifens ausgebildetem Wulstbereich zur Befestigung des Luftreifens an der Felge und mit wenigstens in einer axialen Stirnseite der Felge ausgebildeter Ringkammer mit zumindest einer radial inneren und einer radial äußeren Ringkammerwand ausgebildet, wobei die Ringkammer nach axial außen zur Stirnseite der Felge hin in ihrem radial inneren Bereich offen ausgebildet ist. Die radial innere Ringkammerwand ist in einem ersten axialen Erstreckungsbereich zylindrisch und in einem zweiten sich nach axial außen zur Stirnseite der Felge an den ersten Bereich anschließenden axialen Bereich stetig radial erweitert ausgebildet. Die Seitenwand des Reifens erstreckt sich im montierten Zustand von axial außen durch die Öffnung in der axial außen ausgebildeten Ringkammerwand hindurch nach innen. Ein Füllring liegt im montierten Zustand des Fahrzeugreifens im ersten und im zweiten axialen Bereich mit korrespondiered zur radial äußeren Oberfläche der inneren Ringkammerwand ausgebildeter radialer Innenfläche auf der radial äußeren Oberfläche der inneren Ringkammerwand spielfrei auf. Die radial äußere Oberfläche des Füllrings ist im montierten Zustand des Fahrzeugreifens im ersten und im zweiten axialen Bereich jeweils parallel zur radial inneren Oberfläche des Füllrings ausgebildet. Die radial äußere Oberfläche des Füllrings ist im montierten Zustand des Fahrzeugreifens innerhalb der Ringkammer zumindest im ersten axialen Bereich mit in radialer Richtung formschlüssigem Berührkontakt zum Wulstbereich ausgebildet. Der Wulstbereich steht mit seiner radialen Außenseite in der Ringkammer in formschlüssigem Berührkontakt zur radial äußeren Ringkammerwand, sodaß der Wulstbereich nach radial außen und über den Füllring nach radial innen formschlüssig mit der Ringkammer verbunden ist. Nach Einführen des Wulstes in die Ringkammer wird der Füllring radial innerhalb des Wulstes axial in die Ringkammer eingeführt, sodaß zwischen radial innerer Ringkammerwand und Füllring, zwischen Füllring und Wulst und zwischen Wulst und radial äußerer Ringkammerwand radialer Formschluß hergestellt wird. Durch die Kontur von radial innerer Ringkammerwand und Füllring kann der Füllring sehr einfach und funktionssicher genau in seiner beabsichtigten Sitzposition in der Ringkammer positioniert werden und ist zusätzlich in seiner Sitzposition in der Ringkammer in axialer Richtung gegen unbeabsichtigtes Entfernen formschlüssig gesichert. Die radial äußere Felgenmantel steht vollständig zur individuellen konstruktiven Gestaltung zur Verfügung. Hierdurch können beispielsweise Notlaufeigenschaften eines Fahrleugluftreifens individuell optimiert werden.

Anspruch 2 beinhaltet eine besonders vorteilhafte Ausgestaltung eines erfindungsgemäßen Fahrzeugluftreifens, durch die in einfacher Weise ein Einschieben des Füllrings in den Öffnungsspalt bis in seine gesicherte Sitzposition ermöglicht wird. Die Ausbildung gemäß den Merkmalen von Anspruch 3 ermöglicht in einfacher Weise eine besonders sichere Montage des Füllrings. Während des Aufschieben entlang des dritten Abschnitts wird der Füllring zunächst stetig soweit gedehnt, daß er in einfacher Weise in seine Arbeitsposition auf der Felge geschoben werden kann, in der er durch die Kontur des zweiten und dritten Abschnitts und seine korrespondierende Ausbildung selbstständig durch Formschluß gesichert ist. Besonders vorteilhaft ist die Ausbildung gemäß den Merkmalen von Anspruch 4. Die baulich kurze Ausbildung und der stetige Konturverlauf einer nasenförmigen Erhöhung erleichtern bei geringem baulichem Aufwand und mit geringem Gewicht des Rades die Montage, und sichern sehr einfach den Reifen auf der Felge. Die Ansprüche 5 und 6 beinhalten vorteilhafte, besonders funktionssichere erfindungsgemäße Ausführungen.

Besonders vorteilhaft ist die Ausbildung gemäß den Merkmalen von Anspruch 7. Der in seiner Umfangslänge - insbesondere elastisch - veränderbare Wulstkern ermöglicht die Montage des Wulstes durch Bewegung über die Notlaufstützfläche mit einem größeren Wulstkerndurchmesser als im befestigten Betriebszustand des Wulstes und zur Bewegung über das Felgenhorn mit einem kleineren Wulstkerndurchmesser als im befestigten Betriebszustand, sodaß die Ausbildung der Notlaufstützflächen nicht mehr in Abhängigkeit vom Durchmesser des Wulstkerns im Betriebszustand und vom inneren Felgenhorndurchmesser, sondern in erster Linie optimalen Notlaufeigenschaften entsprechend ausgebildet werden kann. Nach Einführen des Wulstes in die Ringkammer wird der Füllring radial innerhalb des Wulstes axial in die Ringkammer eingeführt,sodaß zwischen radial innerer Ringkammerwand und Füllring, zwischen Füllring und Wulst und zwischen Wulst und radial äußerer Ringkammerwand radialer Formschluß und zwischen axial innerer Ringkammerwand und Wulst und zwischen Wulst und dem die axial äußere Ringkammerwand bildenden Felgenhorn jeweils axialer Formschluß hergestellt wird. Während des Fahrzeugradbetriebes besteht sowohl im Normal- als auch im Notlaufbetrieb nach Druckluftverlust ein vollständiger Formschluß nach axial außen und innen und nach radial außen und innen zwischen einstückiger Ringkammer der Felge und Wulst. Sowohl die axialen als auch die radial auf den Wulst wirkenden Kräfte werden somit unmittelbar in die im Befestigungsbereich einstückige Felge eingeleitet. In das einzige zusätzliche Element, den Füllring, werden auch im Notlaufbetrieb keine wesentlichen axialen Kräfte eingeleitet. Auf diese Weise kann der Wulst sogar im Notlaufbetrieb sicher und zuverlässig seine Position in der Ringkammer beibehalten. Der in seiner Umfangslänge veränderbare Wulst kann somit in einfacher und funktionssicherer Weise sowohl montiert als auch demontiert werden wobei sowohl die Notlaufstüzflächen für den Notlauf optimiert als auch das Felgenhorn hinsichtlich der axialen Stütze für den Wulst und der Wulstkern in seinem Betriebszustand hinsichtlich seiner Eigenschaften im Betriebszustand optimiert werden können. Besonders sicher ist die Krafteinleitung in die Felge, wenn der Wulst über seine ganze axiale Erstrekkung nach radial innen vollständig auf dem Füllring aufliegt. Wenn der Wulst und der Füllring die Ringkammer vollständig ausfüllen, wird ein besonders zuverlässiger Formschluss zwischen Wulst und Felge erzielt. Durch Ausbildung des Fahrzeugluftreifens mit elastisch veränderbarer Umfangslänge des Wulstes ist besonders einfach und sicher eine Umfangslängenveränderung von einer ersten Umfangslänge zu individuell entsprechend den jeweiligen Erfordernissen geänderten weiteren Umfangslängen entgegen der Wirkung rückstellender Kräfte und wieder zurück in die erste Umfangslänge unter Ausnützung der rückstellenden Kräfte erzielbar.

Bevorzugt ist die Ausbildung gemäß den Merkmalen von Anspruch 8 zur Erzielung besonders guter Notlaufeigenschaften, da der Laufstreifen trotz optimaler Abstandsbreite der zwischen den Reifenwülsten des Fahrzeugluftreifens gerade in den besonders kritischen Schulterbereichen ausreichend gestützt werden kann. Besonders vorteilhaft ist es, zur Stützung der im Notlauf besonders kritischen Schulterbereiche auf den axialen Seitenbereichen der radial äußeren Mantelfläche der Felge jeweils eine Notlaufstützfläche auszubilden.

Besonders vorteilhaft ist eine Ausbildung des Fahrzeugrades, bei dem der Wulstkern ein im Wulst integriert ausgebildeter Gummikern ist. Der Gummikern ist einfach herzustellen und kann besonders einfach und zuverlässig im Wulst verankert werden. Der Wulst kann hierdurch in einfacher, zuverlässiger Weise in seiner Umfangslänge elastisch dehnbar ausgebildet werden. Für einen besonders sicheren Sitz ist der Gummikern mit einer Shore - A- Härte aus dem Bereich von 80 bis 100 - bevorzugt aus dem Bereich zwischen 85 bis 90 - ausgebildet.

In einer anderen Ausbildungsform des Fahrzeugrades ist der Wulst vollständig kernlos ausgebildet. Der Wulst ist besonders einfach ohne zusätzlichen Aufwand für einen Kern herzustellen, ist durch sein kernloses Gummimaterial in seiner Umfangslänge ausreichend elastisch dehnbar auszubilden und kann dennoch sicher und zuverlässig durch den Formschluß in der Ringkammer verankert werden.

Die Ausbildung gemäß den Merkmalen des Anspruchs 12 ermöglicht eine besonders einfache und zuverlässige Montage und Demontage des Fahrzeugluftreifens auf der Felge. Nachdem der Wulst in seine Befestigungsposition in der Ringkammer eingeführt worden ist, wird er durch einfaches axiales Verschieben des Füllrings auf der hierzu ausgebildeten Lagerfläche der Ringkammer in seine Füllposition in der Ringkammer geschoben, wodurch der vollständige Formschluß des Wulstes in der Ringkammer hergestellt und gesichert wird. Durch einfaches axiales Herausziehen des Füllrings aus seiner Füllposition wird der Formschluß aufgehoben, so daß der Wulst aus der Ringkammer entfernt und der Fahrzeugluftreifen von der Felge demontiert werden kann.

Durch die Ausbildung gemäß den Merkmalen von Anspruch 13 kann zusätzlich radialer Formschluß zwischen unmittelbar an den Wulst anschließendem Seitenwandbereich und Felgenhorn und zwischen unmittelbar an den Wulst anschließendem Seitenwandbereich und Füllring und somit zur Felge zumindest im Duchdringungsbereich durch die Öffnung erzielt werden. Die Verankerung des Wulstes in der Felge wird hierdurch noch sicherer. Darüberhinaus wird der Zugang zum Füllring von außen hierdurch erleichtert, sodaß Montage und Demontage vereinfacht werden.

Durch die konisch erweiterte Ausbildung der radial äußeren Mantelfläche des Füllrings in seiner Erstreckung außerhalb der Ringkammer gemäß den Merkmalen von Anspruch 14 wird die Reifenseitenwand im Felgenhornbereich zusätzlich sichergestellt, daß der Verlauf der unteren Reifenseitenwand im axial außen an das Felgenhorn anschließenden Bereich mit einer nach radial außen gerichteten Richtungskomponente behaftet. Auf diese Weise wird zusätzlich der Formschluß zwischen Reifenwulst und Felge gesichert. Besonders vorteilhaft ist es, wenn der Füllring die Reifenseitenwand im unmittelbaren Anschlußbereich an das Felgenhorn zusätzlich Steifigkeit verleiht. Um dies zu erreichen, ist es vorteilhaft im unmittelbaren Anschluß an das Felgenhorn axial außerhalb des Felgenhorn, die radial äußere Kontur des Füllrings mit einer zur Reifenseitenwandkontur in diesem Bereich korrespondierenden Krümmungsverlauf auszubilden.

Bevorzugt ist das Fahrzeugrad derart ausgebildet, daß die axial äußere Stirnfläche als eine axiale Auflagefläche zur axialen Stütze der unteren Reifenseitenwand ausgebildet ist. Auf diese Weise ist der Reifen bei Kurvenfahrten im unteren Seitenwandbereich zur Erzielung guter Handlingeigenschaften axial gestützt und kann bei besonderen Stoßbelastungen unter Aufhebung der axialen Stützwirkung bis in den unteren Seitenwandbereich zur Erzielung guter Komforteigenschaften einfedern.

Besonders sicher ist die Befestigung des Reifens gemäß den Merkmalen des Anspruchs 16.

Besonders vorteilhaft, weil einfach und besonders funktionssicher herzustellen, zu montieren und zu demontieren ist die Ausbildung gemäß den Merkmalen von Anspruch 17. Durch die zylindriche Ausbildung des Füllrings durch die gesamte axiale Erstreckung der Ringkammer wird besonders zuverlässig ein Einleiten axialer Kräfte vom Wulst in den Füllring verhindert, sodaß die Verankerung des Wulstes in der Felge noch zuverlässiger wird.

Durch die Ausbildung eines Fahrzeugrades, bei dem der größte Außendurchmesser der Notlaufstützflächen um einen Faktor zwischen 1,05 und 1,3 größer als der Innenringdurchmesser des Wulstkerns im montierten Zustand des Fahrzeugrades beträgt, ermöglicht optimale Notlaufeigenschaften durch besonders großen Außendurchmesser der Notlaufstützflächen bei Beibehaltung der zur Erzielung guter Einfederung des Reifens und somit guter Komforteigenschaften optimaler kleiner Innenringdurchmesser des Wulstkerns.

Die Ausbildung eines Fahrzeugrades, bei dem der größte Außendurchmesser der Notlaufstützflächen um einen Faktor zwischen 1,1 und 1,2 größer als der Innenringdurchmesser des Wulstkerns im montierten Zustand des Fahrzeugrades beträgt, stellt einen opimale Ausbildungsbereich der Standardreifendimensionen zur Lösung der Zielkonflikte zwischen gute Notlaufeigenschften einerseits und Komfort und Gewicht des Fahrzeugrades andererseits dar.

Die Ausbildung eines Fahrzeugrades, bei dem der Wulstkern eine Dehnbarkeit und/oder Stauchbarkeit von 5 bis 30 % aufweist, ermöglicht eine einfache und zuverlässige Montage trotz optimaler Notlaufeigenschaften durch Ausbildung besonders großer Außendurchmesser der Notlaufstützflächen trotz Beibehaltung der Ausbildung der Erzielung guter Einfederung des Reifens und somit guter Komforteigenschaften durch optimal kleine Innenringdurchmesser des Wulstkerns. Durch einfaches - insbesondere elastisches - Dehnen und/oder Stauchen des Wulstes wird der Wulst jeweils auf den zur Montage bzw zur Demontage über die Notlaufstützflächen erforderlichen optimalen Durchmesser, auf den zur Montage bzw zur Demontage über das nach innen gerichtete Felgenhorn erforderlichen optimalen Durchmesser und auf den zum sicheren Sitz in der Ringkammer erforderlichen optimalen Durchmesser eingestellt. Die Ausbildung eines Fahrzeugrades, bei dem der Wulstkern eine Dehnbarkeit und/oder Stauchbarkeit von 10 bis 20 % ermöglicht eine einfache und zuverlässige Montage bei opimalem Ausbildungsbereich der Standardreifendimensionen zur Lösung der Zielkonflikte zwischen guten Notlaufeigenschaften einerseits und Komfort und Gewicht des Fahrzeugrades andererseits.

Bevorzugt ist die Ausbildung gemäß den Merkmalen von Anspruch 18, wonach der Wulstkern eine Dehnbarkeit von 5 bis 30 % und eine Stauchbarkeit von 1 bis 5% aufweist und wonach der Wulstkern insbesondere im montierten Zustand des Fahrzeugrades ungedehnt und ungestaucht ist. Durch einfaches - insbesondere elastisches - Dehnen aus dem ungedehnten und ungestauchten Zustand wird der Wulstkern auf einen zur Montage bzw Demontage über die Notlaufstützfläche optimal großen Durchmesser gebracht. Durch einfaches - insbesondere elastisches - Stauchen aus dem ungedehnten und ungestauchten Zustand wird der Wulstkern auf einen zur Montage bzw Demontage über das nach innen gerichtete Felgenhorn optimal kleinen Durchmesser gebracht. Die Ausbildung eines Fahrzeugrades, bei dem der Wulstkern eine Dehnbarkeit 10 bis 20 % und eine Stauchbarkeit von 2,5 bis 3,5 % aufweist, ermöglicht eine einfache und zuverlässige Montage bei opimalem Ausbildungsbereich der Standardreifendimensionen zur Lösung der Zielkonflikte zwischen guten Notlaufeigenschaften einerseits und Komfort und Gewicht des Fahrzeugrades andererseits.Besonders vorteilhaft ist es, wenn der Wulstkern im montierten Zustand des Fahrzeugrades ungedehnt und ungestaucht ist und somit in Umfangsrichtung weitgehend frei von in Umfangsrichtung wirkenden inneren Kräften ist. Besonders vorteilhaft ist hierbei die elastische dehnbare und elastisch stauchbare Ausbildung. Der Wulstkern wird aus dem ungedehnten und ungestauchten Zustand zur Montage über die Notlaufstützflächen den elastischen Rückstellkräften entgegenwirkend in Umfangsrichtung gedehnt. Nach der Montage über die Notlaufstützflächen wird er duch die Rückstellkräfte wieder in seiner Umfangslänge bis in den ungedehnten und ungestauchten Zustand verkleinert. Zur Montage über das radial nach innen gerichtete Felgenhorn wird der Wulstkern aus dem ungedehnten und ungestauchten Zustand den elastischen Rückstellkräften entgegenwirkend in Umfangsrichtung gestaucht. Nach der Montage über das Felgenhorn wird er in der Ringkammer duch die Rückstellkräfte wieder in seiner Umfangslänge bis in den ungedehnten und ungestauchten Zustand vergrößert. In entsprechenderweise erfolgt die Demontage.

Die Ausbildung gemäß den Merkmalen von Anspruch 20 ermöglicht eine besonders zuverlässige, einfach handhabbare Ausbildung eines Füllrings. Die im wesentlichen in Umfangsrichtung gerichteten gummierten Festigkeitsträger - multifilamentartig oder monofilamentartig - aus Stahl oder textiler Bauart gewährleisten eine sichere, zuverlässige Beibehaltung des Sitzes des Füllrings auf der Lagerfläche in der Ringkammer und ausreichend Elastizität zur axialen Montage und Demontage. Besonders einfach herzustellen ist die Ausbildung des Füllrings aus einem um die Achse des Füllrings wendelförmig gespulten, kontinuierlichen Festigkeitsträgers.

Die Erfindung wird im folgenden anhand der in den Figuren 1 bis 5 dargestellten Ausführungsbeispiele näher erläutert. Hierin zeigen

Fig. 1 eine Querschnittsdarstellung eines erfindungsgemäßen Fahrzeugrades mit montiertem Fahrzeugreifen,

Fig. 2 Querschnittsdarstellungen von Ausführungsformen des Füllrings,

Fig. 3 Querschnittsdarstellungen von Ausführungsformen des Wulstbereichs,

Fig.4 schematische Darstellung zur Erläuterung der Montage und der Demontage,

Fig.5 eine Querschnittsdarstellung eines erfindungsgemäßen Fahrzeugrades mit montiertem Fahrzeugreifen in alternativer Ausgestaltungsform.

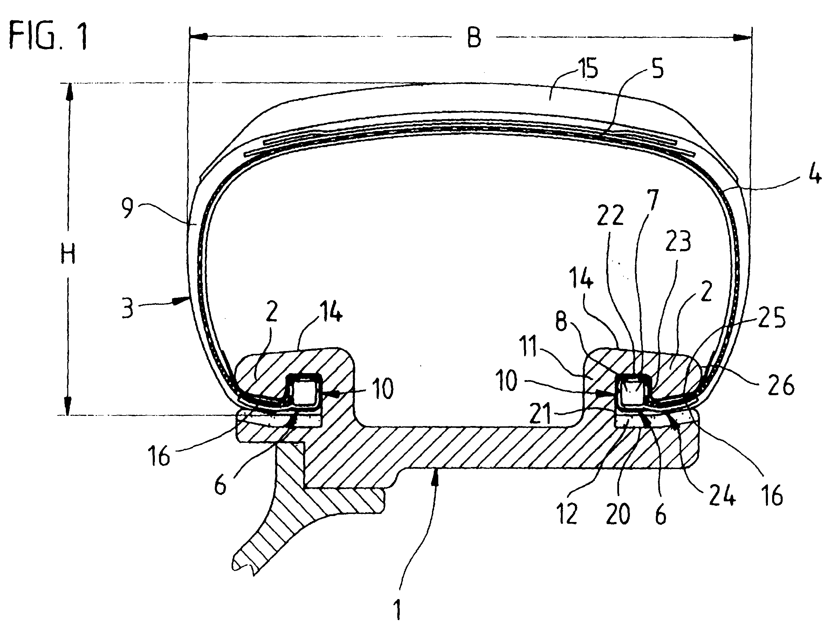

Fig. 1 zeigt ein Fahrzeugrad mit Fahrzeugluftreifen 3 und Felge 1 mit einem Verhältnis von maximaler Höhe H zu maximaler Breite B des Fahrzeugluftreifens H/B ≤ 0,6. Der Fahrzeugluftreifen 3 weist eine über den Umfang des Reifens und vom linken Wulstbereich 6 des Fahrzeugluftreifens zum rechten Wulstbereich 6 reichende, nicht näher dargestellte, Innenschicht auf, über die eine Karkasse 4 radialer Bauart mit beispielsweise einer oder zwei Karkassenlagen aufgebaut ist. Im Bereich der Lauffläche ist radial außerhalb der Karkasse 4 ein Gürtel 5 bekannter Bauart mit beispielsweise zwei Gürtellagen aus in Kautschuk eingebetteten Festigkeitsträgern, z.B. aus Stahlcord, aufgelegt. Der Gürtel reicht über den gesamten Umfang des Reifens hinweg und erstreckt sich in axialer Richtung von einem Reifenschulterbereich in den anderen.

Die Stahlcorde verlaufen im spitzen Winkel von beispielsweise 10-30 ° zur Umfangsrichtung. Radial außerhalb der Gürtellagen ist es denkbar, eine nicht dargestellte Gürtelbandage mit im wesentlichen zur Umfangsrichtung verlaufenden Festigkeitsträgern, beispielsweise aus Nylon, aufzuwickeln.

Radial außerhalb des Gürtels bzw. der Gürtelbandage ist in bekannter Weise ein über den Umfang des Reifens reichender und sich von Schulterbereich zu Schulterbereich erstreckender Laufstreifen 15 aus Kautschukmaterial aufgelegt. Im Seitenwandbereich 9 ist Kautschukmaterial auf die Karkasse 4 aufgelegt. Das Seitenwandkautschukmaterial reicht vom Schulterbereich bis zum Wulstbereich 6.

Die einstückig ausgebildete Felge 1 ist an ihren beiden axialen Stirnseiten jeweils mit einer konzentrisch zur Felge angeordneten Ringkammer 10 mit einer radial inneren Ringkammerwand 20, einer axial inneren Ringkammerwand 21, einer radial äußeren Ringkammerwand 22 und einer axial äußeren Ringkammerwand 23 einstückig ausgebildet. Die Ringkammerwand 23 begrenzt das radial nach innen gerichtete Felgenhorn 2. Axial nach innen zwischen Felgenhorn 2 und radial innerer Ringkammerwand 20 ist eine ringförmige Durchgangsöffnung 24 von axial außen zur Ringkammer hin ausgebildet. Das Felgenhorn 2 ist an seiner radial nach innen gerichteten Seite 25 von axial innen nach axial außen konisch erweitert und an seiner Stirnfläche 26 gekrümmt ausgebildet. Auf der radial äußeren Seite des Felgenhorn erstreckt sich ein Notlaufsattel 11 mit seiner Notlaufsatteloberfläche 14 nach axial innen über die Position der Ringkammer 10 hinweg. Jede Notlaufsatteloberfläche erstreckt sich soweit nach axial innen, daß der Gürtel in seinen axialen Randzonen von der Schulter jeweils mit 10 bis 30 %, beispielsweise 25%, axial überdeckt ist.

Der Fahrzeugluftreifen 3 umgreift mit seinen unteren Seitenwandbereichen 16 die nach radial innen erstreckten Hörner 2. Die Krümmung der Stirnfläche 6 des Horns entspricht der gewünschten Reifenkontur im Bereich des Horns.

Am Ende des unteren Seitenwandbereiches 16 ist jeweils der Wulstbereich 6 mit zur Innenseite des Reifens ausgebildeter wulstartiger Verdickung 7 ausgebildet. Der Wulst ist mit einem in das Karkassenlagenende eingebetteten elastisch dehnbaren und elastisch stauchbaren Kern 8 ausgebildet. Im montierten Zustand gemäß Fig. 1 füllt der Wulstbereich 6 unter Formschluß zur axial inneren Ringkammerwand 21 und zur radial äußeren Ringkammerwand 22 sowie zur axial äußeren Ringkammerwand 23 ca. 1/2 bis 2/3 des Ringkammerraums. Radial innerhalb des Wulstes ist ein Füllring 12 radial formschlüssig zum Wulstbereich 6 nach radial außen und nach radial innen zur radial inneren Ringkammerwand 20 ausgebildet, der sich in axialer Richtung von der Ringkammerwand 10 über die gesamte axiale Erstreckung des Wulstbereichs 6 durch die Ringöffnung 24 hindurch nach axial außen erstreckt. Der Füllring 12 ist über den gesamten axialen Erstreckungsbereich der Ringkammer und somit des Wulstes an seiner radial äußeren Mantelfläche zylindrisch und axial außerhalb der Ringkammer parallel zur radial inneren Seite des Felgenhorns 25 konisch erweitert ausgebildet. In der Ausführung von Fig.1 erstreckt sich der Füllring 12 in axialer Richtung bis hin zur axialen Position der Stirnseite 26 des Felgenhorns. Der Wulst steht in der Ausführung gemäß Fig. 1 unter Formschluß nach radial außen, nach axial innen und nach axial außen zu den geschlossenen Ringkammerwänden 22, 23, 21 und durch den radialen Formschluß zum Füllring 12, der seinerseits in radialem Formschluß zur geschlossenen Ringkammerwand 20 ausgebildet ist, auch zur Ringkammerwand 20 in radialem Formschluß. Da der Wulst auf seiner gesamten Oberfläche in formschlüssigem Berührkontakt zur einstückig ausgebildeten Ringkammer bzw. zum Füllring 12 und der Füllring 12 innerhalb der Ringkammer seinerseits mit seiner Oberfläche in vollständigem Berührkontakt zu den Ringkammerwänden bzw. zum Wulst ausgebildet ist, ist die Ringkammer vollständig von Wulst und Füllring ausgefüllt. Darüber hinaus steht der untere Seitenwandbereich 16 mit der radial inneren konischen Felgenhornseite 25 und mit der korrespondierend ausgebildeten konischen äußeren Mantelfläche des Füllrings 12 auch im axialen Erstreckungsbereich des Felgenhorns in vollständigem Berührkontakt.

Der vollständige Formschluß des Wulstes zur Felge sichert den Sitz des Reifens auf der Felge während des Fahrens.

Im Bereich der Stirnfläche 26 des Horns 2 der Felge liegt die Reifenseitenwand jeweils lediglich unter Vorspannung an.

Bei Auflage eines Umfangselementes des Reifens auf die Straßenoberfläche wirken resultierende Normalkräfte F zwischen Fahrzeugluftreifen und Straßenoberfläche. Bei der Eindämpfung dieser Kräfte wirkt auf die Seitenwände 9 des Reifens eine resultierende Kraft $F_A$, die im wesentlichen in axialer Richtung wirkt und die Seitenwand leicht weiter verkrümmt. Aufgrund der gewählten Vorspannung zwischen Stirnfläche 26 und Reifen liegt der Reifen in diesem Normallastfall unter Reduzierung der Vorspannung immer noch an der Stirnfläche 26 an. Bei Kurvenfahrten wird im Bereich der besonders stark belasteten Kurvenaußenseite aufgrund der eingeleiteten Kräfte die Vorspannung zwischen Stirnfläche 26 und Reifenseitenwand erhöht. Der Fahrzeugluftreifen 3 wird somit an der besonders stark belasteten Seite durch das Horn versteift. Ein sicheres Handling ist gewährleistet.

Bei starken Stoßwirkungen auf den Reifen wirken stärkere resultierende Kräfte $F_A$ auf die Reifenseitenwände. Diese beulen weiter nach axial außen bei der Eindämpfung aus. Der für die flexible Krümmung der Seitenwand hierzu zur Verfügung stehende Seitenwandbereich reicht dabei vom Schulterbereich des Laufstreifens bis über den gesamten gekrümmten Bereich der Stirnfläche 26. Bei starken Stößen hebt die Reifenseitenwand 9 im Bereich der Stirnfläche 26 unter Bildung eines Spaltes zwischen Stirnfläche 26 und Reifenseitenwand ab.

Auch besonders starke auf den Reifen einwirkende Stöße können aufgrund des großen Krümmungsradius R und der sehr langen für die Krümmung zur Verfügung stehenden Bogenlänge der Reifenseitenwand zwischen Reifenschulter und zylindrischer Felgenoberfläche unter geringer Flächenbeanspruchung der gekrümmten Seitenwandoberflächen sicher eingedämpft werden.

Der nach axial innen reichende Notlaufsattel 11 erstreckt sich über den gesamten Umfangsbereich des Reitens. Bei plötzlichem Innendruckverlust stützt sich der Reifen mit seinem Laufstreifenbereich auf den beiderseitig vorgesehenen, mit im wesentlichen zylindrischer oder nach axial innen mit leicht konisch erweiterter Oberfläche mit einem Steigungswinkel von 0 bis 10 ° zur Achsrichtung ausgebildeten Notlaufsattel 11 ab. Frühzeitige Zerstörung und Ablösung des Reitens werden vermieden.

Ebenso ist es denkbar, die radial äußere Oberfläche der Notlaufstützflächen mit zusatzlichem Stützmaterial zu belegen. Das zusätzliche Stützmaterial ist aus hartem Kunststoff, Gummi oder Kunststoffschaum ausgebildet, das zur Dämpfung unempfindlich gegen Stöße ist und das gute Gleiteigenschaften für den Notlauf aufweist.

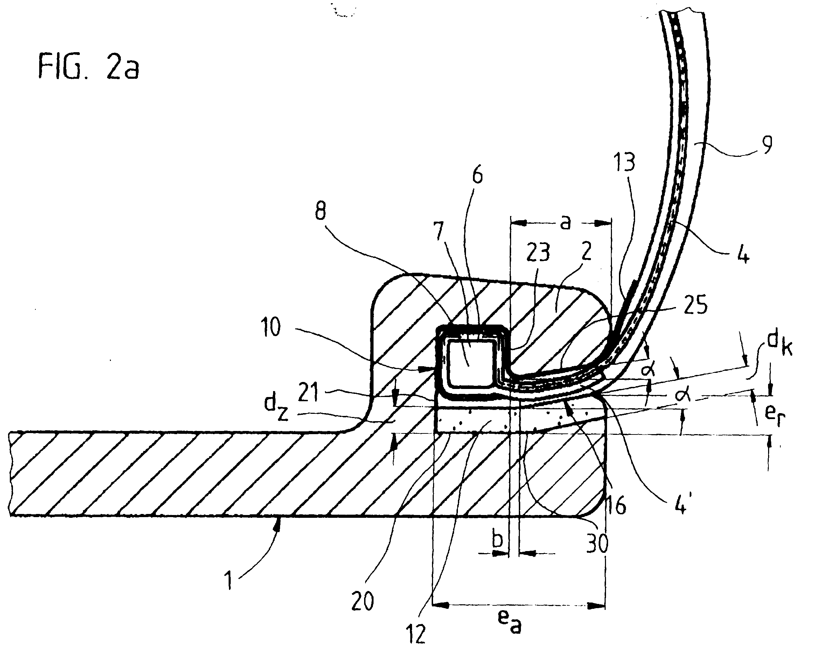

Fig. 2a zeigt eine vergrößerte Detaildarstellung des äußeren Randbereichs der Felge von Fig.1. In Fig.2a ist erkennbar, daß sich die Innenseite 25 des Felgenhorns von der Ringkammerwand 23 ausgehend unter Einschluß eines Winkels α zur Radachse nach axial außen hin bis zur gekrümmten Stirnfläche 26 des Felgenhorns 2 konisch erweitert. Die radial äußere Mantelfläche des Füllrings 12 ist von der Ringkammerwand 21 ausgehend über den gesamten axialen Erstreckungsbereich der Ringkammer hinweg bis zur Ringkammerwand 23 und in axialer Verlängerung aus der Ringkammer bis zu einem axialen Abstand b zur Ringkammerwand 23 zylindrisch ausgebildet. Ausgehend von einer Kreislinie im Abstand b zur Ringkammerwand 23 ist die radial äußere Mantelfläche des Füllrings 12 in axialer Richtung nach außen parallel zur Innenseite 25 des Felgenhorns ebenfalls unter Einschluß des Winkels α zur Radachse nach axial außen hin konisch erweitert ausgebildet. Der Füllring erstreckt sich ebenso wie das Felgenhorn noch über einen Abstand a von der Ringkammerwand 23 axial nach außen. Die radial innere Mantelfläche des Füllrings 12 ist ebenfalls von der Ringkammerwand 21 ausgehend über den gesamten axialen Erstreckungsbereich der Ringkammer hinweg bis zur Ringkammerwand 23 und in axialer Verlängerung aus der Ringkammer bis zu dem axialen Abstand b zur Ringkammerwand 23 zylindrisch ausgebildet. Ausgehend von der Kreislinie im Abstand b zur Ringkammerwand 23 ist die radial innere Mantelfläche des Füllrings 12 in axialer Richtung nach außen parallel zur radial äußeren Mantelfläche des Füllrings 12 ebenfalls unter Einschluß des Winkels α zur Radachse nach axial außen hin konisch erweitert ausgebildet. Der Füllring 12 ist axial verschiebbar auf einer in seiner äußeren Mantelfläche korrespondierend zur inneren Mantelfläche des Füllrings ausgebildeter Lagerfläche 30 der Felge gelagert. Im Innern der Ringkammer bildet die Lagerfläche 30 die radial innere zylindrische Ringkammerwand 20. Die Abstände a,b sind so gewählt, daß a größer als b ist. Der Winkel α liegt zwischen 2 und 20 °. Im gezeichneten Ausführungsbeispiel liegt er bei ca. 10°. Auf diese Weise umschließen der Wulst mit seiner Verdickung 7 und der sich anschließende untere Seitenwandbereich 16 zwischen innerer Felgenhornfläche 25 und Füllring das Felgenhorn zwangsgeführt, wodurch die Verankerung des Reifens in der Felge zusätzlich gesichert wird.

Der Füllring ist aus Gummi oder aus einem elastischen Kunststoff ausgebildet.

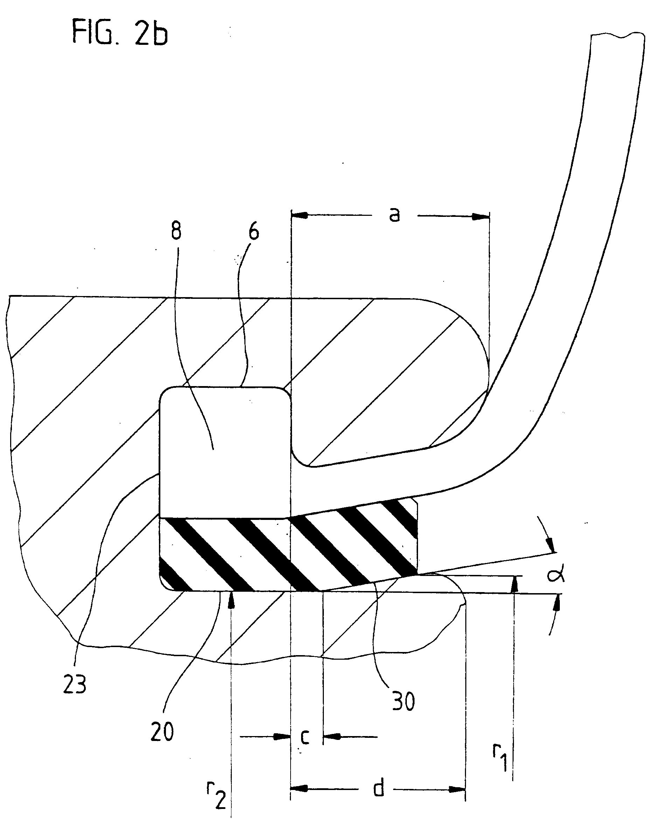

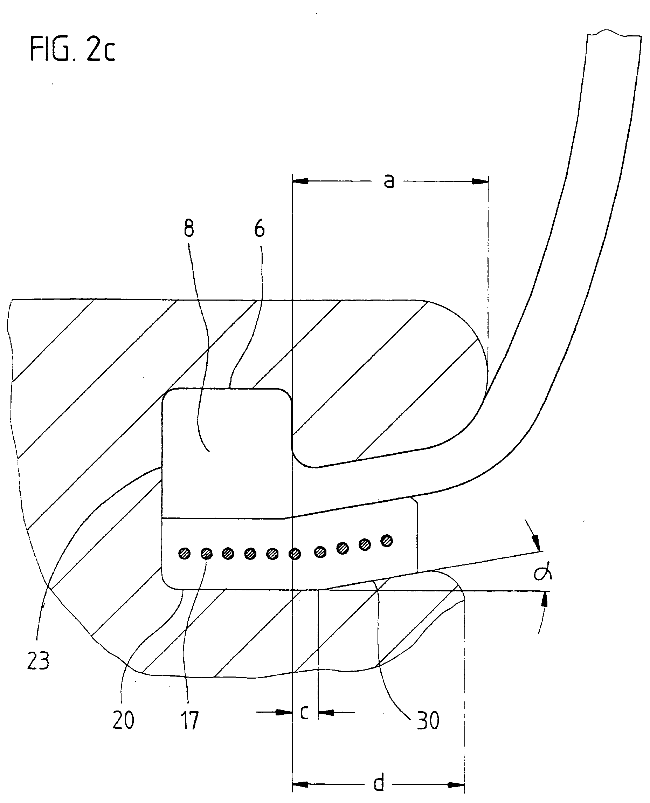

In den Fig.2b und 2c sind alternative Ausführungen des Füllrings 12 dargestellt. Die Lagerflache 30 erstreckt sich axial bis zu einem Abstand c, der kleiner oder gleich dem Abstand a ist, von der Ringkammerseitenwand 23 nach außen. Die radial äußere Mantelfläche des Füllrings ist ab der axialen Position der Ringkammerseitenwand 23 ebenfalls konisch unter dem Steigungswinkel α verlaufend ausgebildet. Die radial Innere Mantelfläche des Füllrings ist ebenso wie die korrespondierend ausgebildete Lagerfläche 30 ab einer axialen Position im Abstand c von der Ringkammerseitenwand nach axial außen ebenso unter dem Winkel α zur Radachse konisch erweitert ausgebildet. Der Abstand c ist kleiner a. Durch diese konische Ausbildung wird wie in Fig.2a der elastische Füllring in seiner montierten Position zusätzlich durch axialen Formschluß gesichert.

In Fig2c ist ein Füllring wie in Fig2b dargestellt, der jedoch im elastischen Gummi- oder Kunststoffmaterial eingebettete im wesentlichen in Umfangsrichtung verlaufende Festigkeitsträger 17 enthält. Die Festigkeitsträger geben dem Füllring zusätzlichen Halt auf der Lagerfläche 30. Die Festigkeitsträger 17 können mehrere nebeneinander angeordnete in Umfangsrichtung gewickelte zugfeste Festigkeitsträger sein. In einer anderen Ausführung ist ein oder mehrere nebeneinander angeordnete Festigkeitsträger kontinuierlich wendelförmig um die Achse des Füllrings von einem axialen Ende zum anderen axialen Ende des Füllrings gewikkelt. Die Abstände zwischen den benachbarten Wicklungen sind äquidistant. Soweit zur Erzielung einer noch sichereren Fixierung des Füllrings auf der Lagerfläche 30 sinnvoll, können die Abstände auch unterschiedlich gewählt sein. Die Festigkeitsträger sind Monofilamente oder Multifilamente aus Stahl. In einer anderen Ausführung sind die Festigkeitsträger textile Monofilamente oder Multifilamente. Es ist auch denkbar die Festigkeitsträger 17 aus Gewebestreifen auszubilden. Die Verstärkung des Füllrings 12 durch Festigkeitsträger in der beschriebenen Art ist auch beim Ausführungsbeispiel von Fig.2a möglich.

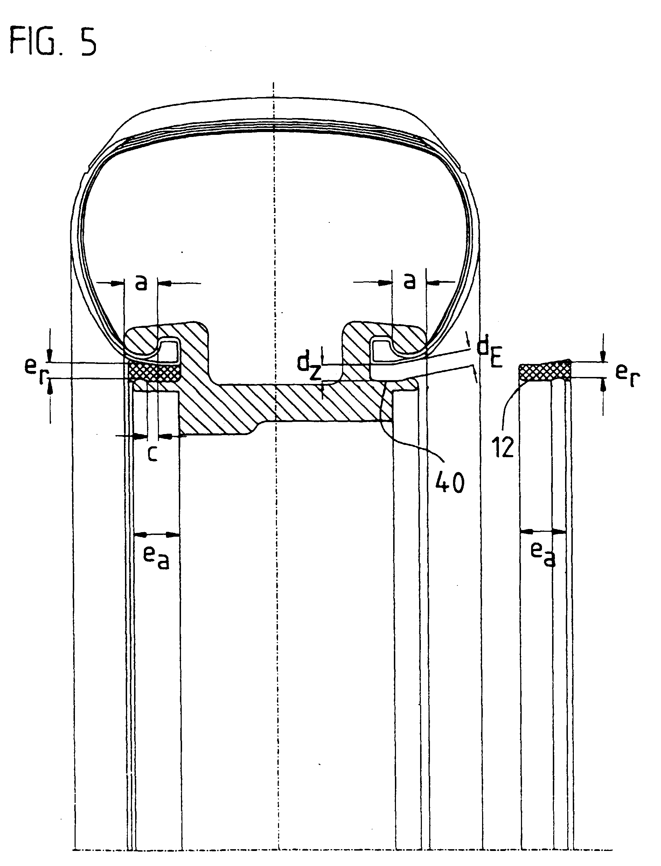

Fig.5 zeigt eine weiter alternative Ausführungsform des Füllrings 12. Die Lagerfläche 40 erstreckt sich axial bis zu einem Abstand c, der kleiner als Abstand a ist, von der Ringkammerseitenwand 23 zylindrisch nach außen. Im axialen Anschlußbereich ist die Lagerfläche 40 mit stetiger Steigung radial erweitert und in dem stetig daran anschließenden axialen Bereich mit stetigem Gefälle radial verjüngt ausgebildet, wobei der erweiterte und der verjüngte Bereich zusammen eine nasenförmige Erhebung bilden, die sich über den gesamten Umfang der Stützfläche 40 erstreckt. Die radial innere Mantelfläche des Füllrings ist der korrespondierend ausgebildeten Lagerfläche 40 entsprechend ab einer axialen Position im Abstand c von der Ringkammerseitenwand nach axial mit einer korrespondierend zur nasenförmigen Erhebung ausgebildeten nasenförmigen Vertiefung ausgebildet. Parallel zum Bereich der Erweiterung der inneren Mantelfläche ist die radial äußere Mantelfläche des Füllrings axial außerhalb der Position der Ringkammerseitenwand 23 mit stetiger Steigung radial erweitert ausgebildet. Durch diese nasenförmige Ausbildung wird der elastische Füllring in seiner montierten Position zusätzlich durch axialen Formschluß gesichert.

Wie am Beispiel von Fig.2a beispielhaft für alle Ausführungen dargestellt ist, erstreckt sich der Füllring in seinem zylindrischen und seinem sich anschließenden konischen Bereich in axialer Richtung über eine Länge $e_a$ und in radialer Richtung im axialen Bereich $e_a$ über eine Länge $e_r$, wobei das Verhältnis $e_a$ zu $e_r$ zwischen 2 und 10, bevorzugt zwischen 2,5 und 5, liegt. Im zylindrischen Abschnitt ist die Dicke des Füllrings mit $d_Z$ und im konischen Abschnitt mit $d_K$ bezeichnet, wobei die Dicke das Maß der Erstreckung des Füllrings in Richtung senkrecht zur radial inneren Mantelfläche des Füllrings im montierten Zustand ist. Für $d_Z$ und $d_K$ gilt der Zusammenhang $d_Z = d_K \cdot x$; mit $0,98 \le x \le 1,02$. Im Beispiel gilt $d_Z = d_K$. Wie am Beispiel von Fig.2a beispielhaft für alle Ausführungen dargestellt ist, ist das Verhältnis aus maximalem Radius $r_1$ der radial innere Ringkammerwand im konischen Bereich und dem Radius $r_2$ der radial innere Ringkammerwand im zylindrischen Bereich zwischen 1,005 und 1,4. Diese Verhältnisse sind entsprechend auch für die Ausführung von Fig.5 gültig, wobei sich der Füllring hier in seinem zylindrischen und seinem sich anschließenden nasenförmigen Bereich in axialer Richtung über eine Länge $e_a$ und in radialer Richtung im axialen Bereich $e_a$ über eine Länge $e_r$ erstreckt, wobei das Verhältnis $e_a$ zu $e_r$ zwischen 2 und 10, bevorzugt zwischen 2,5 und 5, liegt.

Im zylindrischen Abschnitt ist die Dicke des Füllrings mit $d_Z$ und im stetig erweiterten Abschnitt mit $d_K$ bezeichnet, wobei die Dicke das Maß der Erstrekkung des Füllrings in Richtung senkrecht zur radial inneren Mantelfläche des Füllrings im montierten Zustand ist. Für $d_Z$ und $d_K$ gilt der Zusammenhang $d_Z = d_K \cdot x$; mit $0,98 \le x \le 1,02$. Im Beispiel gilt $d_Z = d_K$. Wie am Beispiel von Fig.2a beispielhaft für alle Ausführungen dargestellt ist, ist auch am Beispiel von Figur 5 das Verhältnis aus maximalem Radius aus $r_1$ der radial innere Ringkammerwand im nasenförmigen Bereich und dem Radius $r_2$ der radial innere Ringkammerwand im zylindrischen Bereich zwischen 1,005 und 1,4.

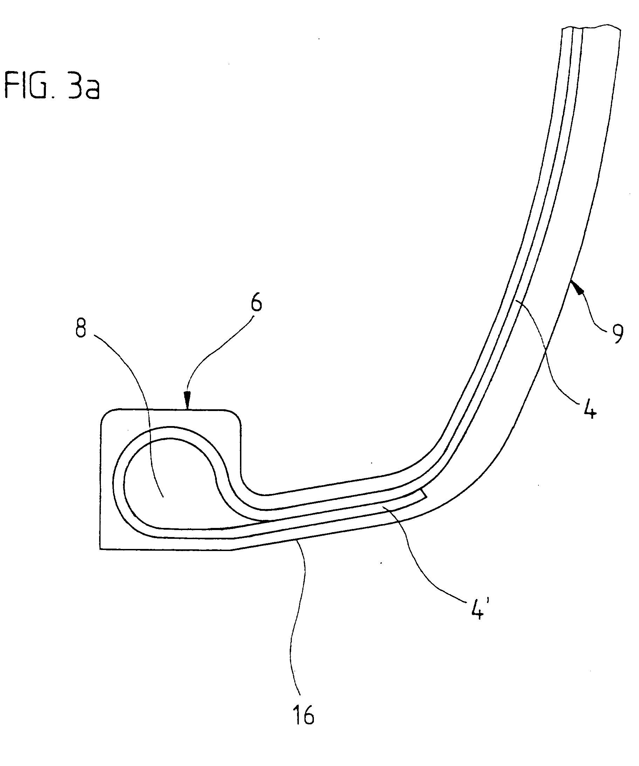

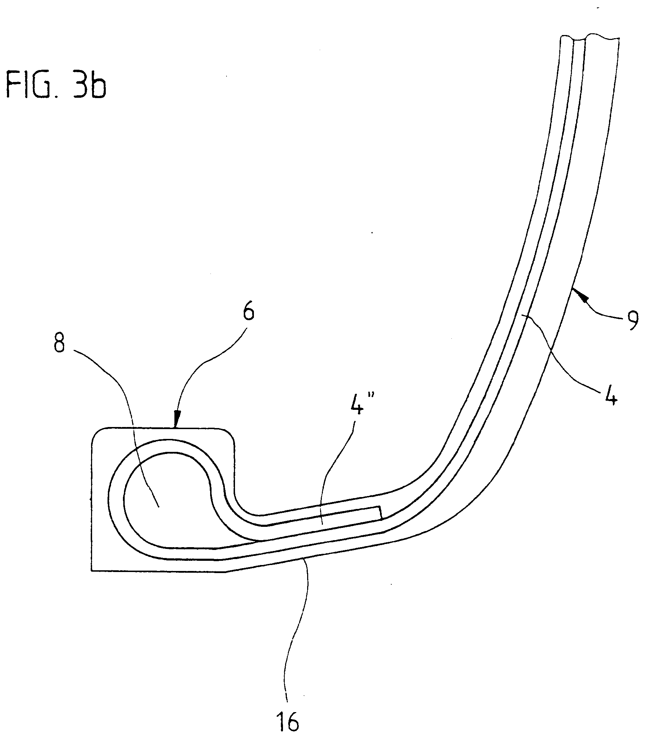

Der Wulstkern 8 wird, wie in den Fig.1,2 und 3a dargestellt ist, durch Einbettung des Kerns 8 in die Karkasse 4 durch Umschlag der Karkasse 4 um den Kern von innen nach außen oder, wie im Ausführungsbeispiel von Fig. 3b dargestellt ist, von außen nach innen verankert. Die Karkasse 4 ist eng um den Kern 8 gewickelt und der Umschlag 4' ist ebenso wie im anderen Ausführungsbeispiel der Umschlag 4" im Anschluß an den Kern 8 in unmittelbarem Kontakt zum Hauptteil der Karkasse. Der Kern 8 ist tröpfchenförmig zum Berührungspunkt zwischen Umschlag und Hauptteil der Karkasse verjüngt ausgebildet. Zur Ausbildung des Kerns 8 wird ein elastisches Gummimaterial mit einer Shore-A-Härte von 80 bis 100, vorzugsweise 85 bis 90 - im Ausführungsbeispiel von Figur 1 mit einer Shore-A-Härte von 87 - gewählt, das eine elastische Dehnbarkeit in Umfangsrichtung des Kerns von 5 bis 30%, für Standard-Reifendimensionen von 10 bis 20%, und eine elastische Stauchbarkeit von 1 bis 5%, für Standard-Reifendimensionen von 2,5 bis 3,5 Prozent, aufweist.

Der Kern wird durch Extrusion durch injection moulding oder vergleichsweise bekannte Techniken hergestellt.

Es ist auch denkbar, den Wulst kernlos auszubilden, wobei auch in diesem nichtdargestellten Ausführungsbeispiel das Gummimaterial des Wulstes so gewählt wird, daß der Wulst die genannten Dehnungs- und Stauchungseigenschaften in Umfangsrichtung aufweist.

Soweit der Abrieb zwischen Felgenhorn und unterer Seitenwand unerwünscht groß wird, ist es möglich, wie in Figur 1 und 2a beispielhaft dargestellt, zusätzlich zwischen Felgenhorn und Wulst einen zusätzlichen Streifen 13 von abriebfestem Material, beispielsweise von abriebfestem Gummi oder Kunststoff auszubilden. Der abriebfeste Streifen kann bis in die Ringkammer reichen und dort um den Wulst umgeschlagen sein.

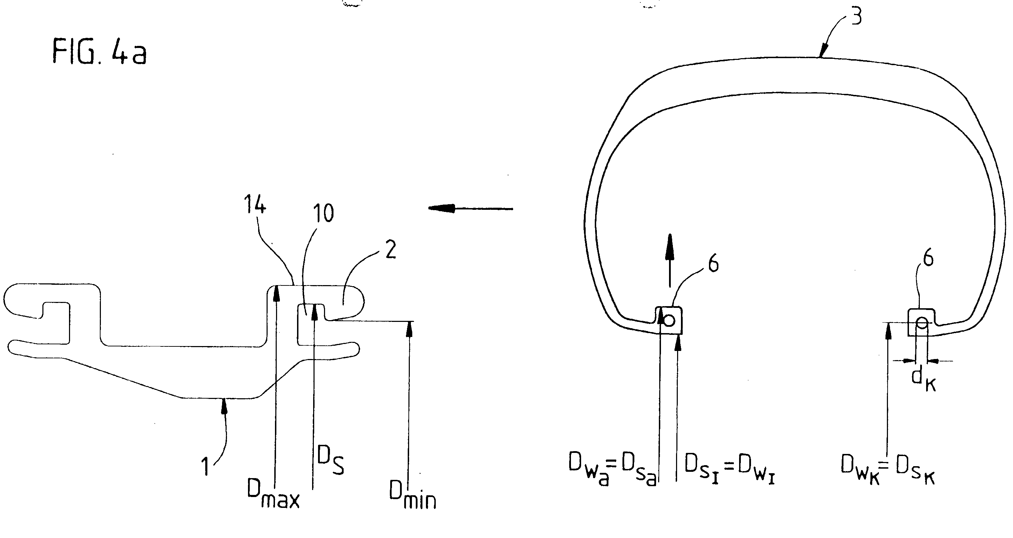

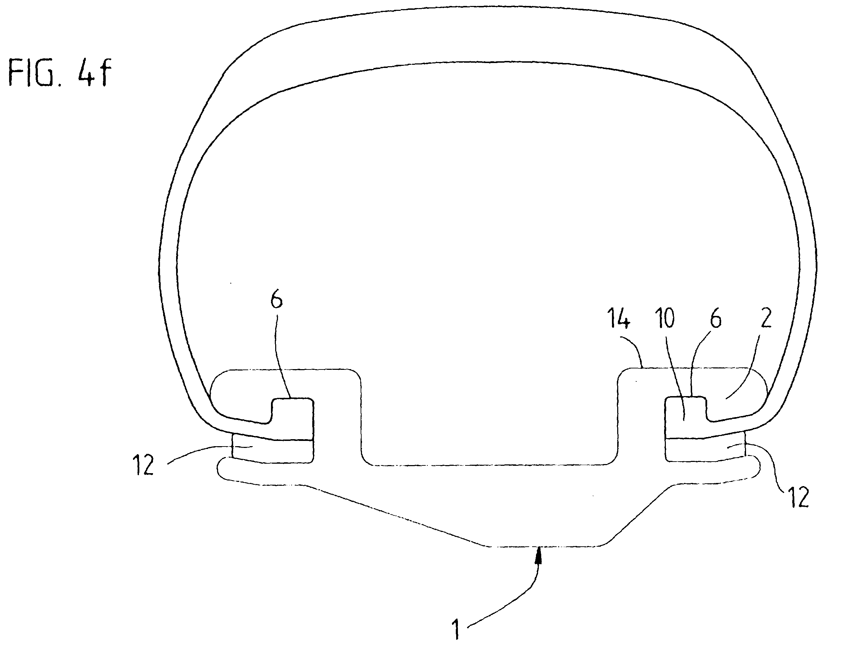

Anhand der schematischen Darstellungen der Figuren 4a bis 4e wird im Folgenden die Montage des Reifens auf einer Felge beschrieben. Die Notlaufstützflächen 14 weisen einen maximalen Außendurchmesser Dmax, die beiden Felgenhörner einen minimalen Innendurchmesser Dmin auf. Der Reifenwulst ist in Fig.4a im ungedehnten und ungestauchten Zustand. Sein Außendurchmesser Dwa entspricht dem Durchmesser der radial äußeren Ringkammerwand 22 und somit dem äußeren Durchmesser des Wulstes Dsa in dessen Sitzposition in der Ringkammer. Sein Innendurchmesser Dwi entspricht dem Durchmesser der radial äußeren Mantelfläche des Füllrings 12 in der Ringkammer und somit dem inneren Durchmesser des Wulstes Dsi in dessen Sitzposition in der Ringkammer. Der Kern mit einer Dicke d, beispielsweise ist d= 10mm, in radialer Richtung hat in der radialen Position der halben radialen Dicke einen mittleren Kerndurchmesser Dwk durch die Reifenachse, der dem mittleren Kerndurchmesser Dsk in der Sitzposition des Wulstes in der Ringkammer entspricht. Dmax ist größer als Dsa, Dsa ist größer als Dsk, Dsk ist größer als Dmin, Dmin ist größer als Dsi.

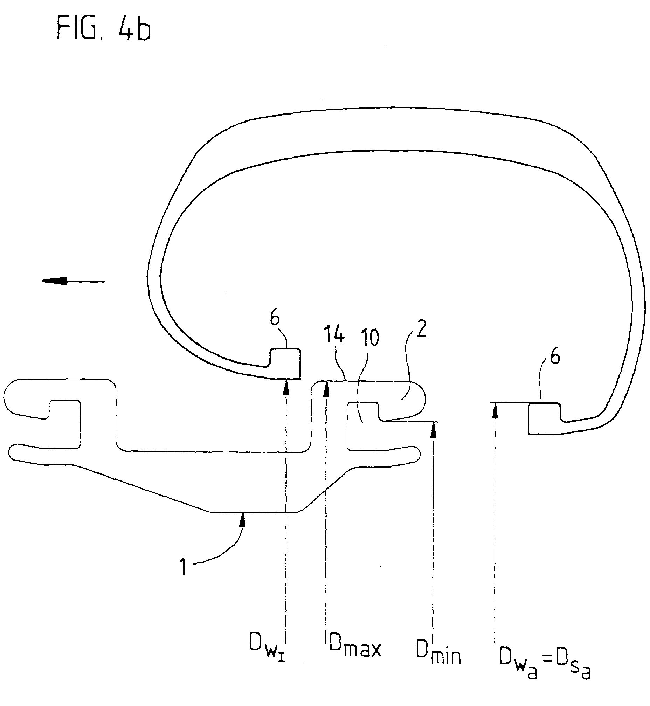

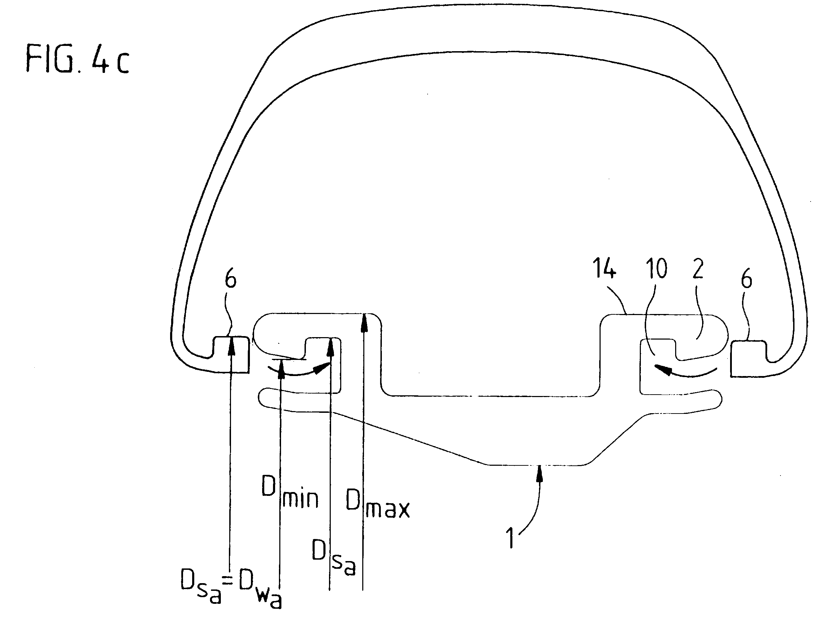

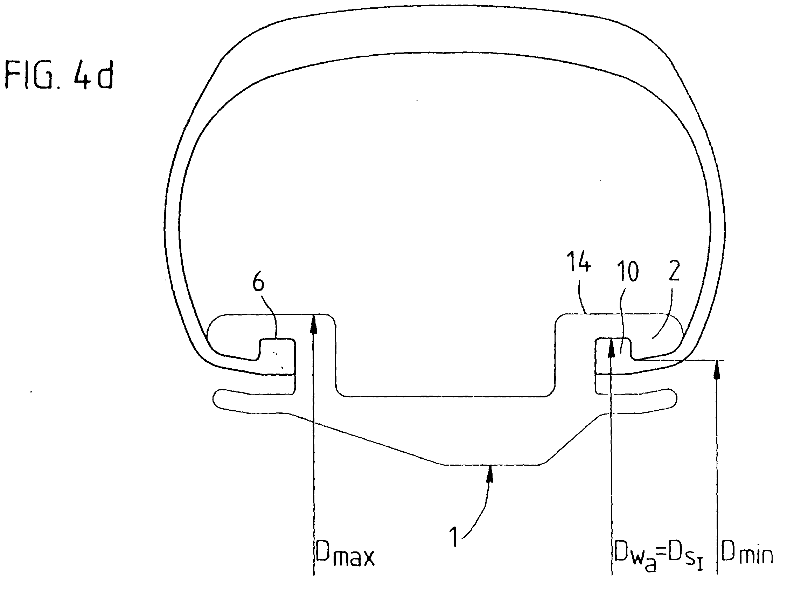

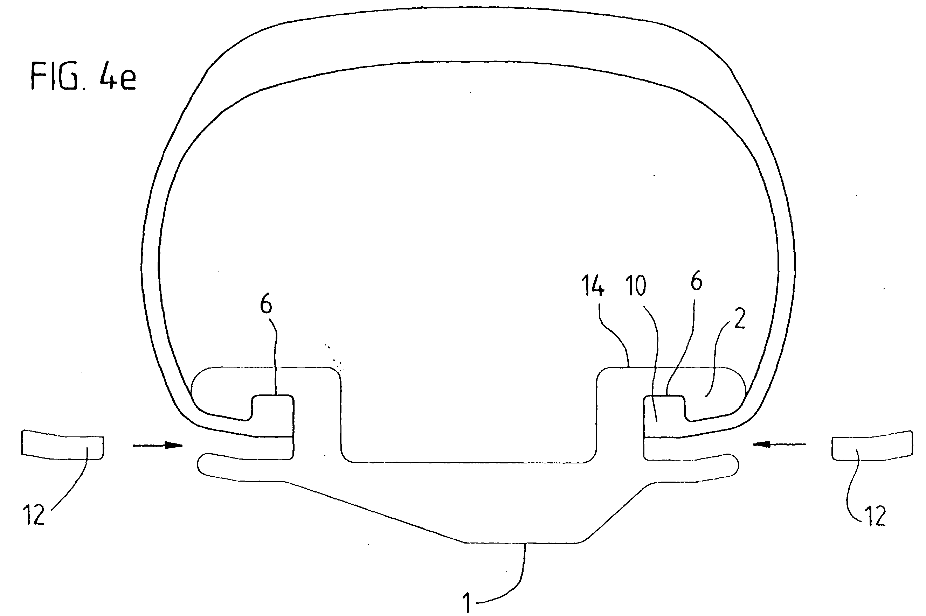

Zur Montage wird der Reifen 3 konzentrisch zur Felge an die Felge in den Figuren von rechts axial herangeführt. Der linke Wulst wird entgegen der elastischen Rückstellkräfte des Wulstes in Umfangsrichtung soweit gedehnt, daß der Innendurchmesser Dwi des Wulstes größer als der maximale Außendurchmesser Dmax der Notlaufstützflächen ist. Danach wird, wie in Figur 4b dargestellt ist, der Reifen 3 weiter konzentrisch zur Felge axial zur Felge hinbewegt, wobei der linke Wulst unter Beibehaltung seines gedehnten Zustandes mit Spiel zu den Notlaufstützflächen 14 axial über die Felge geschoben wird. Sobald der linke Wulst eine Position auf der linken Seite axial außerhalb des linken Felgenhorns erreicht hat wird der Wulst unter Ausnutzung der elastischen Rückstellkräfte wieder in seiner Umfangslänge soweit zurückgestellt, daß er wieder den ungedehnten und ungestauchten Zustand einnimmt. In diesem Zustand entspricht Dwi wieder Dsi, Dwa wieder Dsa und Dwk entspricht ebenfalls wieder dem mittleren Durchmesser Dsk des Kerns in dessen Sitzposition in der Ringkammer. Wie durch die Pfeildarstellung von Fig 4c dargestellt, werden beide Wülste nun entgegen der elastischen Rückstellkräfte in ihrer Umfangslänge soweit gestaucht, daß der Außendurchmesser Dwa des Wulstes kleiner als der minimale Felgenhorndurchmesser Dmin ist.In diesem Zustand werden die Wülste mit Spiel zum Felgenhorn axial in die jeweilige Ringkammer eingeführt. Unter Ausnutzung der elastischen Rückstellkräfte werden die Wülste wieder in ihrer Umfangslänge soweit zurückgestellt, daß sie wieder den ungedehnten und ungestauchten Zustand einnehmen. In diesem Zustand entspricht Dwi wieder Dsi, Dwa wieder Dsa und Dwk entspricht ebenfalls wieder dem mittleren Durchmesser Dsk des Kerns in dessen Sitzposition in der Ringkammer. Die Wülste sitzen ungedehnt und ungestaucht in der Ringkammer. Dieser Zustand ist in Fig.4d dargestellt. Wie in Fig4e dargestellt ist, wird nun jeweils ein Füllring 12 von axial außen zwischen unterem Seitenwandbereich 16 des Reitens und Lagerfläche 30 axial soweit eingeführt, daß die Ringkammer vollständig von Wulst und Füllring ausgefüllt ist. Der vollständige Formschluß zwischen einstückiger Ringkammer und Wulst ist hergestellt.

Zur Demontage wird entsprechend zunächst der Füllring axial nach außen entfernt. Danach werden die Wülste soweit gestaucht, daß sie mit Spiel zum Felgenhorn aus der Ringkammer gezogen werden können. Nach der Rückstellung der Umfangslänge wird ein Wulst soweit gedehnt, daß er mit Spiel zu den Notlaufstützflächen axial von der Felge gezogen werden kann.

Es ist auch denkbar, den Reifen zur Montage anstatt ihn axial zu verschieben, zunächst um 90 ° zu drehen und dann zu dehnen und im gedehnten Zustand in radialer Richtung auf die Felge zu schieben, um ihn dort wieder um 90 ° zurückzudrehen, so daß sich die beiden Wülste jeweils axial außerhalb der Felge befinden. Die weitere Montage erfolgt wie oben beschrieben.

Im einem Ausführungsbeispiel ist der Durchmesser Dmax beispielsweise um das 1,2-fache größer als der Innendurchmesser Dsi des Wulstes in der Sitzposition in der Ringkammer und der minimale Felgenhorndurchmesser ist um den Faktor 1,025 kleiner als der Außendurchmesser Dsa des Wulstes in der Sitzposition in der Ringkammer. Als Gummimaterial des Wulstes wird ein Gummimaterial mit einer Dehnungsfähigkeit und mit einer Stauchbarkeit gewählt, die ein solches Dehnen und Stauchen des Wulstes in Umfangsrichtung erlauben, daß der Wulst über die Notlaufstützfläche 14 und in die Ringkammer mit Spiel axial bewegt werden können. Beispielsweise wird ein bekanntes Gummimaterial verwendet, das eine Umfangsdehnung des Wulstes um 25% und eine Umfangsstauchung um 2,7% ermöglichen.

Die Notlaufstützflächen können auch mit einem größeren oder kleineren maximalen Außendurchmesser Dmax entsprechend den individuell einzustellenden Notlaufeigenschaften eines Reifens ausgebildet sein. Der maximale Durchmesser Dmax der Notlaufstützflächen ist dabei bei Standardreifen optimalerweise um einen Faktor 1,1 bis 1,2 größer als der Innenringdurchmesser Dsi des Wulstkerns im montierten Zustand des Fahrzeugrades. Er kann in Spezialfällen jedoch auch um einen Faktor zwischen 1,05 und 1,3 größer sein als der Innenringdurchmesser Dsi des Wulstkerns im montierten Zustand des Fahrzeugrades. Als Gummimaterial des Wulstes wird hierfür jeweils ein Gummimaterial mit einer Dehnungsfähigkeit und mit einer Stauchbarkeit gewählt, die ein solches Dehnen und Stauchen des Wulstes in Umfangsrichtung erlauben, daß der Wulst über die Notlaufstützfläche 14 und in die Ringkammer mit Spiel axial bewegt werden können. Dementsprechend wird der Wulst, der im montierten Zustand des Fahrzeugrades ungedehnt und ungestaucht ist, derart ausgebildet, daß er eine Dehnbarkeit zwischen 10 und 20 % und eine Stauchbarkeit von 2,5 bis 3,5 % bei Standardreifen und in den Spezialfällen eine Dehnbarkeit zwischen 5 und 30 % und eine Stauchbarkeit zwischen aufweist 1 bis 5% aufweist.

Es ist auch denkbar, einen Notlaufsattel auf der radial äußeren Mantelfläche auszubilden, dessen Notlaufstützfläche sich über den gesamten axialen Mittenbereich der Felge erstreckt. Diese kann beispielsweise über die gesamte axiale Gürtelbreite des Reifens ausgebildet sein. Es ist auch denkbar, einen Notlaufstützkörper mit einer Notlaufstützfläche auf der Felgenmanteloberfläche zu befestigen.

*Bezugszeichenliste*

| 1 | Felge |
| 2 | Felgenhorn |
| 3 | Fahrzeugluftreifen |
| 4 | Karkasse |
| 5 | Gürtel |
| 6 | Wulstbereich |
| 7 | Verdickung |
| 8 | Kern |
| 9 | Seitenwand |
| 10 | Ringkammer |
| 11 | Notlaufsattel |
| 12 | Füllring |
| 13 | Abriebfester Streifen |
| 14 | Notlaufsatteloberfläche |
| 15 | Lauffläche |
| 16 | unterer Seitenwandbereich |
| 17 | Festigkeitsträger |
| 20 | Ringkammerwand |
| 21 | Ringkammerwand |
| 22 | Ringkammerwand |
| 23 | Ringkammerwand |
| 24 | Ringöffnung |
| 25 | Innenseite des Felgenhorns |
| 26 | Stirnfläche des Felgenhorns |
| 30 | Lagerfläche |
| 40 | Lagerfläche |

**Patentansprüche**

1. Fahrzeugrad mit - insbesondere einteiliger - Felge und schlauchlosem Luftreifen, das insbesondere für Notlauf geeignet ist,

   - mit an jeder Seitenwand des Luftreifens ausgebildetem Wulstbereich zur Befestigung des Luftreifens an der Felge,
   - mit wenigstens in einer axialen Stirnseite der Felge ausgebildeter Ringkammer mit zumindest einer radial inneren und einer radial äußeren Ringkammerwand, wobei die Ringkammer nach axial außen zur Stirnseite der Felge hin in ihrem radial inneren Bereich offen ausgebildet ist,
   - wobei die radial innere Ringkammerwand in einem ersten axialen Erstreckungsbereich zylindrisch und in einem zweiten sich nach axial außen zur Stirnseite der Felge an den ersten Bereich anschließenden axialen Bereich stetig radial erweitert ausgebildet ist,
   - wobei sich die Seitenwand des Reifens im montierten Zustand von axial außen durch die Öffnung in der axial außen ausgebildeten Ringkammerwand hindurch nach innen erstreckt,
   - wobei ein Füllring im montierten Zustand des Fahrzeugreifens im ersten und im zweiten axialen Bereich mit korrespondiered zur radial äußeren Oberfläche der inneren Ringkammerwand ausgebildeter radialer Innenfläche auf der radial äußeren Oberfläche der inneren Ringkammerwand spielfrei aufliegt,
   - wobei die radial äußere Oberfläche des Füllrings im montierten Zustand des Fahrzeugreifens im ersten und im zweiten axialen Bereich jeweils parallel zur radial inneren Oberfläche des Füllrings ausgebildet ist,
   - wobei die radial äußere Oberfläche des Füllrings im montierten Zustand des Fahrzeugreifens innerhalb der Ringkammer zumindest im ersten axialen Bereich mit in radialer Richtung formschlüssigem Berührkontakt zum Wulstbereich ausgebildet ist,

- wobei der Wulstbereich mit seiner radialen Außenseite in der Ringkammer in formschlüssigem Berührkontakt zur radial äußeren Ringkammerwand steht, sodaß der Wulstbereich nach radial außen und über den Füllring nach radial innen formschlüssig mit der Ringkammer verbunden ist.

2. Fahrzeugrad gemäß den Merkmalen von Anspruch 1,
wobei der Füllring einen axialen Verlauf seiner Dicke im ersten Bereich eine Dicke $d_Z$ und im zweiten Bereich eine Dicke $d_K$ aufweist, wobei die Dicke an jeder Position dem jeweiligen Maß der Erstreckung senkrecht zur radial inneren Oberfläche des Füllrings an dieser Position entspricht, wobei für $d_Z$ und $d_K$ gilt: $d_Z = d_K \cdot x$; mit $0,98 \leq x \leq 1,02$.

3. Fahrzeugrad gemäß den Merkmalen von Anspruch 1 oder 2,
wobei die radial innere Ringkammerwand in einem dritten sich nach axial außen zur Stirnseite der Felge an den zweiten Bereich anschließenden axialen Bereich stetig radial verjüngt ausgebildet ist,

- wobei der Füllring im montierten Zustand des Fahrzeugreifens im ersten, im zweiten und im dritten axialen Bereich mit korrespondiered zur radial äußeren Oberfläche der inneren Ringkammerwand ausgebildeter radialer Innenfläche auf der radial äußeren Oberfläche der inneren Ringkammerwand spielfrei aufliegt.

4. Fahrzeugrad gemäß den Merkmalen von Anspruch 3,
wobei der zweite und/oder der dritte axiale Bereich der radial inneren Ringkammerwand gekrümmt ausgebildet sind,
wobei insbesonder der zweite und der dritte axiale Bereich der radial inneren Ringkammerwand zusammen eine sich über den Umfang der Ringkammer erstreckende in ihren Schnittebenen durch die Radachse nasenförmige Erhebung bilden.

5. Fahrzeugrad gemäß den Merkmalen von einem oder mehreren der vorangegangenen Ansprüche,
wobei das Querschnittsverhältnis aus maximaler axialer Erstreckung $e_a$ zu maximaler radialer Erstreckung des Ringquerschnitts $e_r$ des Füllrings im ersten und zweiten Bereich zwischen 2 und 10, insbesondere zwischen 2,5 und 5.

6. Fahrzeugrad gemäß den Merkmalen von einem oder mehreren der vorangegangenen Ansprüche,

- wobei die radial innere Ringkammerwand in einem ersten axialen Erstreckungsbereich zylindrisch und in einem zweiten sich nach axial außen zur Stirnseite der Felge an den ersten Bereich anschließenden axialen Bereich stetig radial erweitert ausgebildet ist und das Verhältnis aus maximalem Radius der radial innere Ringkammerwand $r_2$ im zweiten Bereich und dem Radius der radial innere Ringkammerwand $r_1$ im ersten Bereich zwischen 1,005 und 1,4 liegt

7. Fahrzeugrad gemäß den Merkmalen von einem oder mehreren der vorangegangenen Ansprüche

- insbesondere mit auf der radial äußeren Mantelfläche der Felge ausgebildeter Notlaufstützfläche
- mit an jeder Seitenwand des Luftreifens zur Innenseite des Luftreifens hin verdickt ausgebildetem in seiner Umfangslänge - insbesondere elastisch - veränderbarem Wulst zur Befestigung des Luftreifens an der Felge,
- mit wenigstens in einer axialen Stirnseite der Felge einstückig ausgebildeter Ringkammer mit einer radial inneren, einer radial äußeren, einer axial zur Felgenmitte hin inneren und einer axial zur Felgenaußenseite hin äußeren Ringkammerwand, wobei die nach radial innen , nach radial außen und nach axial innen zur Felgenmitte hin ausgebildeten Ringkammerwände geschlossen und die nach axial außen zur Stirnseite der Felge hin ausgebildete Ringkammerwand im radial äußeren Bereich als ein radial nach innen gerichtetes Felgenhorn geschlossen ausgebildet und in ihrem radial inneren Bereich als Durchgangsöffnung offen ausgebildet ist,
- wobei die Seitenwand des Reifens sich von axial außen durch die Öffnung in der axial außen ausgebildeten Ringkammerwand hindurch nach innen erstreckt und der Wulst in der Ringkammer auf der radialen Außenseite des Füllrings radial fest gelagert ist und in formschlüssigem Berührkontakt zur radial äußeren, zur axial inneren und zur axial äußeren geschlossenen Ringkammerwand ausgebildet ist, sodaß der Wulst nach radial außen, nach axial außen, nach axial innen und über den Füllring nach radial innen formschlüssig mit der einstückig ausgebildeten Ringkammer verbunden ist,
- wobei der Wulst insbesondere über seine ganze axiale Erstreckung nach radial innen vollständig auf dem Füllring aufliegt und wobei insbesondere der Wulst und der Füllring die Ringkammer vollständig ausfüllen.

8. Fahrzeugrad gemäß den Merkmalen von einem oder mehreren der vorangegangenen Ansprüche, wobei die axiale Position der in der radial äußeren Mantelfläche ausgebildeten Notlaufstützfläche zumindest teilweise der axialen Position des in der Felge befestigten Wulstes entspricht.

9. Fahrzeugrad gemäß den Merkmalen von einem oder mehreren der vorangegangenen Ansprüche, wobei wenigstens auf einem axialen Seitenbereich der radial äußeren Mantelfläche der Felge eine Notlaufstützfläche ausgebildet ist, die sich insbesondere axial soweit nach innen erstreckt, daß der Gürtel in seiner axialen Randzone von der Schulter mit 10 bis 30 % überdeckt ist.

10. Fahrzeugrad gemäß den Merkmalen von einem oder mehreren der vorangegangenen Ansprüche wobei im Wulst ein Gummikern integriert ausgebildet ist, wobei der Gummikern insbesondere mit einer Shore -A- Härte aus dem Bereich von 80 bis 100, bevorzugt aus dem Bereich zwischen 85 bis 90 ausgebildet ist.

11. Fahrzeugrad gemäß den Merkmalen von einem oder mehreren der Ansprüche 1 bis 9, wobei der Wulst kernlos ausgebildet ist.

12. Fahrzeugrad gemäß den Merkmalen von einem oder mehreren der vorangegangenen Ansprüche, wobei der Füllring zum Lösen und/oder zum Befestigen des Wulstes axial bewegbar ausgebildet ist.

13. Fahrzeugrad gemäß den Merkmalen von einem oder mehreren der vorangegangenen Ansprüche, wobei sich der Füllring in seiner Befestigungsposition in der Ringkammer axial durch die Öffnung nach außen hindurch erstreckt

14. Fahrzeugrad gemäß den Merkmalen von Anspruch 13, wobei der Füllring mit seiner radial äußeren Mantelfläche in einem Erstreckungsbereich außerhalb der Ringkammer der Kontur des Reifens folgend ausgebildet ist.

15. Fahrzeugrad gemäß den Merkmalen von Anspruch 13, wobei der Füllring mit seiner radial äußeren Mantelfläche in einem Erstreckungsbereich außerhalb der Ringkammer konisch erweitert ausgebildet ist.

16. Fahrzeugrad gemäß den Merkmalen von Anspruch 13, wobei der Füllring mit seiner radial äußeren Mantelfläche in einem Erstreckungsbereich außerhalb der Ringkammer der Kontur der Felge folgend ausgebildet ist, wobei der Luftreifen im Innern durch die Felge und außen durch den Füllring gestützt ist.

17. Fahrzeugrad gemäß den Merkmalen von einem der Ansprüche 2 bis 16, wobei der erste Bereich sich über die gesamte axiale Erstreckung des Ringkammerinnenraums erstreckt.

18. Fahrzeugrad gemäß den Merkmalen von einem der vorangegangenen Ansprüche, bei dem der maximale Durchmesser der Notlaufstützflächen um einen Faktor zwischen 1,05 und 1,3 - insbesondere zwischen 1,1 und 1,2 - größer als der Innenringdurchmesser des Wulstkerns im montierten Zustand des Fahrzeugrades beträgt.

19. Fahrzeugrad gemäß den Merkmalen von einem der vorangegangenen Ansprüche, wobei der Wulstkern eine Dehnbarkeit und/oder Stauchbarkeit von 5 bis 30 % - insbesondere 10 bis 20 % - aufweist.

20. Fahrzeugrad gemäß den Merkmalen von einem der vorangegangenen Ansprüche, wobei der Wulstkern eine Dehnbarkeit von 5 bis 30 % -insbesondere 10 bis 20 % - und eine Stauchbarkeit von 1 bis 5% - insbesondere von 2,5 bis 3,5 % - aufweist und wobei der Wulstkern insbesondere im montierten Zustand des Fahrzeugrades ungedehnt und ungestaucht ist.

21. Fahrzeugrad gemäß den Merkmalen von einem der vorangegangenen Ansprüche, wobei der Luftreifen mit seinem Wulst an der Felge befestigt ist und im unteren Seitenwandbereich an der Felge anliegt.

22. Fahrzeugrad gemäß den Merkmalen von einem der vorangegangenen Ansprüche, wobei der Füllring aus einem oder mehreren gummierten - insbesondere um die Achse des Füllrings wendelförmig gewickelten - Festigkeitsträger ausgebildet ist. wobei jeder Festigkeitsträger textiler Art oder aus Stahl monofilamentartig oder multifilamentartig oder aus Gewebe ausgebildet ist.

FIG. 1

FIG. 2a

## FIG. 2b

FIG. 2c

FIG. 3a

FIG. 3b

FIG. 4a

14  10  2

1

$D_S$

$D_{max}$

$D_{min}$

3

6

6

$d_K$

$D_{Wa} = D_{Sa}$  |  $D_{SI} = D_{WI}$

$D_{WK} = D_{SK}$

EP 0 943 465 A1

# FIG. 4b

$D_{w_I}$  $D_{max}$  $D_{min}$  $D_{w_a} = D_{s_a}$

FIG. 4c

$D_{max}$

$D_{sa}$

$D_{min}$

$D_{sa} = D_{wa}$

6

2

10

14

1

6

FIG. 4d

6    14    10    2

1

$D_{max}$    $D_{w_a} = D_{S_I}$    $D_{min}$

EP 0 943 465 A1

FIG. 4e

14 10 6

6

2

6

12

12

1

EP 0 943 465 A1

FIG. 4f

EP 0 943 465 A1

FIG. 5

**Europäisches Patentamt**

# EUROPÄISCHER RECHERCHENBERICHT

Nummer der Anmeldung

EP 98 12 2929

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 36 05 803 A (DAIMLER BENZ AG) 2. Januar 1987 * das ganze Dokument * | 1,7,8,12 | B60C15/02 B60C17/04 |
| A | | 2-6 | |
| D,A | US 1 932 191 A (A. SHOEMAKER) 24. Oktober 1933 * Abbildung 1 * | 1 | |
| A | DE 33 36 239 A (CONTINENTAL GUMMI WERKE AG) 18. April 1985 * Ansprüche; Abbildungen * | 1-22 | |
| A | US 5 082 040 A (SPITZ WOLFGANG) 21. Januar 1992 * Spalte 3, Zeile 1 - Zeile 5; Ansprüche; Abbildungen * | 1-7 | |
| A | DE 30 00 428 A (CONTINENTAL GUMMI WERKE AG) 9. Juli 1981 * Abbildung 2 * | 1 | RECHERCHIERTE SACHGEBIETE (Int.Cl.6) |
| A | DE 23 64 274 A (CONTINENTAL GUMMI WERKE AG) 26. Juni 1975 | 1 | B60C |

Der vorliegende Recherchenbericht wurde für alle Patentansprüche erstellt

| Recherchenort | Abschlußdatum der Recherche | Prüfer |
|---|---|---|
| DEN HAAG | 2. Juli 1999 | Baradat, J-L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 0 943 465 A1**

| Im Recherchenbericht angeführtes Patentdokument | | Datum der Veröffentlichung | Mitglied(er) der Patentfamilie | | Datum der Veröffentlichung |
|---|---|---|---|---|---|
| DE 3605803 | A | 02-01-1987 | KEINE | | |
| US 1932191 | A | 24-10-1933 | KEINE | | |
| DE 3336239 | A | 18-04-1985 | KEINE | | |
| US 5082040 | A | 21-01-1992 | DE | 3931675 A | 04-04-1991 |
| | | | DE | 59003589 D | 05-01-1994 |
| | | | EP | 0418762 A | 27-03-1991 |
| | | | JP | 3121902 A | 23-05-1991 |
| DE 3000428 | A | 09-07-1981 | FR | 2472978 A | 10-07-1981 |
| DE 2364274 | A | 26-06-1975 | KEINE | | |

EPO FORM P0461